# EUROPÄISCHE PATENTSCHRIFT

(11) **EP 1 165 660 B1**
(45) Veröffentlichungstag und Bekanntmachung des Hinweises auf die Patenterteilung: **04.12.2002**
(21) Anmeldenummer: 00910666.7
(22) Anmeldetag: 10.02.2000
(51) Int. Cl.: C08G 69/04

(54) **VERFAHREN ZUR HERSTELLUNG VON POLYAMID 6 MIT GERINGEM EXTRAKTGEHALT, HOHER VISKOSITÄTSSTABILITÄT UND KLEINER REMONOMERISIERUNGSRATE**
METHOD FOR PRODUCING POLYAMIDE 6 OF A LOW EXTRACT CONTENT, HIGH VISCOSITY STABILITY AND LOW REMONOMERIZATION RATE
PROCEDE DE PRODUCTION DE POLYAMIDE 6 A FAIBLE TENEUR EN EXTRAIT, A HAUTE STABILITE DE VISCOSITE ET A FAIBLE TAUX DE REMONOMERISATION

(30) Priorität: 11.02.1999 DE 19905754
(43) Veröffentlichungstag der Anmeldung: 02.01.2002
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE); YAMAMOTO, Motonori, D-68199 Mannheim (DE)
(74) Vertreter: Isenbruck, Günter, Dr.
(86) Internationale Anmeldenummer: EP0001089
(87) Internationale Veröffentlichungsnummer: WO00047651

(56) Entgegenhaltungen:
- EP-A- 0 227 866
- WO-A-98/08889
- US-A- 2 245 129
- US-A- 4 629 776

## Beschreibung

Polyamid 6 wird für die Herstellung von Fasern, Folien und Formteilen verwendet. Bedingt durch die chemischen Gleichgewichte weisen die Polymerisate nach der Schmelzepolymerisation einen hohen Gehalt an ε-Caprolactam und niedermolekularen Reaktionsprodukten (Oligomere) auf. Da sowohl die Oligomere als auch das Caprolactam in Wasser löslich und extrahierbar sind, wird der Gehalt an niedermolekularen Bestandteilen auch als Extraktgehalt bezeichnet.

Um eine Beeinträchtigung der Produktqualität und der Verarbeitungseigenschaften, zum Beispiel während des Spritzguss- und des Extrusionsverfahrens oder während der Verspinnung, auszuschließen, ist eine Verringerung des Extraktgehaltes notwendig.

Üblicherweise erfolgt die hierzu erforderliche sogenannte "Extraktion" mit Hilfe von Wasser bei erhöhten Temperaturen, wie zum Beispiel in DE-A-25 01 348 oder DE-A-27 32 328 beschrieben. Um die Ausbeute der Polymerisation zu erhöhen und um eine Umweltbelastung zu vermeiden, werden die wässrigen Extraktlösungen häufig nicht als Abfall beseitigt, sondern wiederverwertet.

Nicht zuletzt aufgrund der geringeren Löslichkeit von Oligomeren und insbesondere von Dimeren müssen aufwendige Extraktionsschritte mit hohem Energiebedarf eingesetzt werden, um Polyamide mit zufriedenstellender Qualität zu erhalten. In diesem Zusammenhang wurden Verfahren gefunden, bei denen Caprolactam bei der Extraktion von Polyamid 6 als Lösungsvermittler gegenüber den Oligomeren des Lactams eingesetzt wird. In DE-A-43 24 616 wird deshalb vorgeschlagen, dem Extraktionswasser zu Beginn der Extraktion monomeres Caprolactam zuzusetzen.

Bekannt sind auch Verfahren, bei denen der Extraktgehalt durch Verdampfung der Monomere und Oligomere aus dem Polymer verringert wird. In der DE-A-29 48 865 wird ein Verfahren zur Entmonomerisierung angegeben, in dem das Polymer in geschmolzenem Zustand und in Form dünner Schichten einem Vakuum unterworfen wird.

Sämtliche genannten Verfahren haben den Nachteil, daß zum Teil mehrstufige, kosten- und energieaufwendige Verfahrensschritte zur Entmonomerisierung und zur Aufarbeitung der Extraktionswässer notwendig sind.

Ein weiteres Problem liegt in der Veränderung der Produkteigenschaften bei der Weiterverarbeitung von extrahiertem Polyamid 6 mit niedrigem sogenannten Restextraktgehalt und definierter Viskosität. Üblicherweise wird zur Verarbeitung, wie zum Beispiel zur Extrusion oder zur Verspinnung, das Polymer erneut erhitzt und verflüssigt. Bekanntlich bedingen die hohen Temperaturen eine Veränderung bzw. Erhöhung der Viskosität und des Restextrakt- und Restmonomergehalts. Diese sogenannte Viskositätsinstabilität und Remonomerisierung beeinflussen sowohl Verarbeitungsprozesse als auch die Produktqualität negativ.

Der Einsatz von Metalloxiden bei der Herstellung von Polyamiden aus Aminonitrilen als Katalysator zur Förderung des Umsatzes der Nitrilgruppen ist aus WO 98/08889 bekannt. Eine Verminderung des Extraktgehalts wird nicht diskutiert.

Aufgabe der vorliegenden Erfindung ist die Bereitstellung eines Verfahrens zur Herstellung von Polyamiden, die schon im unextrahierten Zustand einen abgesenkten Extrakt- und Dimergehalt besitzen, so daß der technische und der wirtschaftliche Aufwand zur Extraktion der niedermolekularen Bestandteile und zur Aufarbeitung der Extraktwässer verringert wird, und die unter üblichen Verarbeitungstemperaturen und -bedingungen eine höhere Viskositätsstabilität und einen schwächeren Anstieg des Restextraktgehalts aufweisen als bekannte Polyamide.

Die Aufgabe wird erfindungsgemäß gelöst durch das nachstehende Verfahren zur Herstellung von insbesondere monomer- und oligomerarmem Polyamid-6 durch kontinuierliche hydrolytische Polymerisation von Aminonitrilen, vorzugsweise ω-Aminocapronitril, kurz ACN, und gegebenenfalls weiteren polyamidbildenden Monomeren in Gegenwart von Metalloxiden. Die Metalloxide werden hierbei in einer Form eingesetzt, die die mechanische Abtrennung aus dem Reaktionsgemisch erlaubt.

Das erfindungsgemäße kontinuierliche Verfahren zur Herstellung von Polyamiden durch Umsetzung mindestens eines Aminonitrils mit Wasser umfaßt die folgenden Stufen:
(1) Umsetzung mindestens eines Aminonitrils mit Wasser bei einer Temperatur von 200 bis 290°C und einem Druck von 40 bis 70 bar in einem Strömungsrohr, das einen Brönsted-Säurekatalysator, ausgewählt aus einem Beta-Zeolith-, Schichtsilikat- oder einem Metalloxid-Katalysator in Form eines Festbetts enthält,
(2) Entspannung unter Wärmeeintrag oder adiabatische Entspannung des Umsetzungsgemisches aus Stufe (1) in eine erste Abscheidezone auf einen Druck von 20 bis 40 bar, wobei der Druck mindestens 10 bar niedriger ist als der Druck in Stufe (1), und auf eine Temperatur im Bereich von 220 bis 290°C unter Flashverdampfung und Austrag von Ammoniak, Wasser und gegebenenfalls Monomeren und Oligomeren des Aminonitrils,
(3) weitere Umsetzung des Umsetzungsgemisches aus Stufe (2) unter Wasserzusatz bei einer Temperatur von 200 bis 290°C und einem Druck von 25 bis 55 bar, die in Gegenwart eines Brönsted-Säurekatalysators, ausgewählt aus einem Beta-Zeolith-, Schichtsilikat- oder Metalloxid-Katalysator in Form eines Festbettes durchgeführt werden kann,
(4) Entspannung unter Wärmeeintrag oder adiabatische Entspannung des Umsetzungsgemisches aus Stufe (3) in eine zweite Abscheidezone auf einen Druck von 0,01 bis 20 bar, wobei der Druck mindestens 20 bar niedriger ist als der Druck in Stufe (3), und auf eine Temperatur im Bereich von 220 bis 290 °C unter Flashverdampfung und Austrag von Ammoniak, Wasser und gegebenenfalls Monomeren und Oligomeren des Aminonitrils. Vorzugsweise umfaßt das Verfahren zusätzlich die folgende Stufe:
(5) Nachkondensation des Produktgemisches aus Stufe (4) bei einer Temperatur von 230 bis 280°C und einem Druck von 0,01 bis 10 bar.

Dabei werden vorzugsweise die in den Stufen (2) und (4) durch Flashverdampfung ausgetragenen Monomere und Oligomere des Aminonitrils in die Umsetzung zurückgeführt.

Erfindungsgemäß können als Katalysatoren zur heterogenen Katalyse bekannte Metalloxide, wie Zirkonoxid, Aluminiumoxid, Magnesiumoxid, Ceroxid, Lanthanoxid und bevorzugt Titandioxide und auch Silikate, wie Beta-Zeolithe und Schichtsilikate eingesetzt werden. Besonders bevorzugt ist Titandioxid in der sogenannten Anatas-Modifikation. Vorzugsweise liegt das Titandioxid zu mindestens 70 Gew.-%, besonders bevorzugt mindestens 90 %, insbesondere im wesentlichen vollständig in der Anatas-Modifikation vor. Des weiteren wurde gefunden, daß auch Kieselgel, Zeolithe und dotierte Metalloxide, wobei zum Beispiel Ruthenium, Kupfer oder Fluorid zur Dotierung eingesetzt werden, die Umsetzung der genannten Edukte deutlich verbessert. Geeignete Katalysatoren zeichnen sich insbesondere dadurch aus, daß sie leicht Brönsted-sauer sind und eine große spezifische Oberfläche besitzen. Erfindungsgemäß weist der heterogene Katalysator eine makroskopische Form auf, die eine mechanische Abtrennung der Polymerschmelze vom Katalysator, beispielsweise durch Siebe oder Filter, ermöglicht. Vorgeschlagen wird der Katalysator-Einsatz in Strang-Granulat-Form oder als Beschichtung auf Füllkörpern.

Die einzelnen Verfahrensstufen werden nachstehend näher beschrieben.
- Stufe (1):: Umsetzung des Reaktionsgemisches in einem mit Metalloxidkatalysatoren ausgestatteten Strömungsrohr, das bevorzugt einphasigflüssig betrieben wird, bei einer Temperatur von 200 bis 290°C, bevorzugt von 210 bis 260°C und besonders bevorzugt von 225 bis 235°C. Bevorzugt wird ein Druck zwischen 20 und 100 bar, insbesondere 40 bis 70 bar eingestellt. Das Katalysatormaterial liegt als Festbett vor und verbleibt im Reaktor.
- Stufe (2):: Das unter Druck stehende Reaktionsgemisch wird anschließend adiabatisch in eine Abscheidezone entspannt. Der Druck in dieser Abscheidezone liegt in der Regel im Bereich von 20 und 40 bar, bevorzugt im Bereich von 25 bis 35 bar. Die Verweilzeit in dieser ersten Abscheidezone wählt man im allgemeinen im Bereich von 0,5 bis 5 Stunden, bevorzugt 2 bis 4 Stunden, die Temperatur sollte im Bereich von 220 bis 290°C, bevorzugt von 240 bis 270°C eingestellt werden. Bei der Entspannung kommt es unter Nutzung der im Reaktionsgemisch gespeicherten Wärme zu einer Flashverdampfung von noch in der Reaktionsmischung befindlichen Ammoniak- und Wassermengen. Sie enthalten flüchtige Bestandteile wie das Monomer Aminocapronitril und Oligomere. Durch Rektifikation über eine Kolonne können die Wasser- und Ammoniakdämpfe aus dem System entfernt und die organischen Bestandteile in den Prozeß, vorzugsweise in Stufe 1, zurückgeführt werden.
- Stufe (3):: Anschließend wird die unter Druck stehende Mischung über einen Wärmetauscher zusammen mit zugesetztem, ebenfalls vorgeheiztem Wasser in einen weiteren Reaktor überführt und dort bei Temperaturen von 200 bis 290°C, bevorzugt von 210 bis 260°C und besonders bevorzugt von 225 bis 235°C weiter umgesetzt. Bevorzugt wird der Druck im Reaktor wiederum so eingestellt, daß die Reaktionsmischung einphasig-flüssig vorliegt. Er beträgt in der Regel 25 bis 55 bar, vorzugsweise 30 bis 45 bar. Gewünschtenfalls enthält die Stufe ebenfalls die vorstehend genannten heterogenen Metalloxidkatalysatoren, die in Form eines Festbettes vom Produktstrom abgetrennt werden und im Reaktor der dritten Stufe verbleiben.
- Stufe (4):: Das unter Druck stehende Reaktionsgemisch wird anschließend adiabatisch in eine zweite Abscheidezone entspannt. Der Druck in der Abscheidezone liegt in der Regel im Bereich von 0,01 bis 20 bar, bevorzugt im Bereich von 0,1 bis 10 bar, die Temperatur beträgt 220 bis 280°C, vorzugsweise 230 bis 250°C. Die Verweilzeit wählt man hier im allgemeinen im Bereich von 0,5 bis 10 Stunden, bevorzugt von 2 bis 8 Stunden. Bei der Entspannung kommt es zu einer Flashverdampfung, durch die ein Teil der in der Reaktionsmischung befindlichen Ammoniak- und Wassermengen unter Nutzung der Eigenwärme der Reaktionsmischung entbunden werden. Sie enthalten flüchtige Bestandteile wie das Monomer Aminocapronitril und Oligomere. Durch Rektifikation über eine Kolonne können die Wasser- und Ammoniakdämpfe aus dem System entfernt und die organischen Bestandteile in den Prozeß, vorzugsweise in Stufe 1, zurückgeführt werden.
- Stufe (5):: Das Reaktionsgemisch wird dann vorzugsweise in eine Nachreaktionszone überführt, in der die Nachkondensation des Produktgemisches bei einer Temperatur von 220 bis 280°C, bevorzugt von 240 bis 250°C stattfindet.

Dieses Verfahren des erneuten Aufheizens der Reaktionsmischung mit anschließender Flashverdampfung kann bei Bedarf wiederholt werden. Die in den verschiedenen Abscheidezonen verdampfte Wassermenge und damit verbundene Temperaturabsenkung kann durch den jeweils eingestellten Druck gezielt beeinflußt werden. Vorteilhaft ist, daß sich aufgrund dieser adiabatischen Entbindung bzw. Verdampfung aus dem Reaktionsgemisch keine Oligomere oder Additive auf Apparate- und Wärmetauscheroberflächen abscheiden können und somit eine Belagbildung durch flüchtige organische und anorganische Komponenten verhindert wird.

In einer anderen bevorzugten Ausführungsform wird der Reaktionsmischung bei der Entspannung durch Wärmetauscher Energie zugeführt. Die Abtrennung der Gasphase kann durch den Einsatz von gerührten oder nicht-gerührten Abscheidekesseln oder Kesselkaskaden sowie-durch den Einsatz von Verdampferapparaten erfolgen, zum Beispiel durch Umlaufverdampfer oder Dünnschichtverdampfer, Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.

Als übliche Zusatz- und Füllstoffe kann man Pigmente, wie Titandioxid, Siliciumdioxid oder Talk, Kettenregler, wie aliphatische und aromatische Carbon- und Dicarbonsäuren, wie Propionsäure oder Terephthalsäure, Stabilisatoren, wie Kupfer (1) halogenide und Alkalimetallhalogenide, Nukleierungsminel, wie Magnesiumsilikat oder Bornitrid, weitere, homogene, Katalysatoren, wie phosphorige Säure, sowei Antioxidantien in Mengen im Bereich von 0 bis 5 Gew.-%, bevorzugt von 0,05 bis 1 Gew.-%, bezogen auf die Gesamtmenge an Monomeren, einsetzen. Weitere geeignete Additive und Comonomere sind in der DE-A-197 09 390 beschrieben. Die Additive setzt man in der Regel vor dem Granulieren und vor, während oder nach, bevorzugt nach der Polymerisation zu. Besonders bevorzugt werden die Additive dem Reaktionsgemisch erst nach Durchlaufen der Reaktionszonen, die die heterogenen Katalysatoren enthalten, zugesetzt.

In einer besonders bevorzugten Ausführungsform erfolgt der Zusatz von Kettenreglern und anderen Zusatzstoffen nach der zweiten Reaktionsstufe (Abscheidungszone) und vor oder in der dritten Reaktionsstufe. Vorteilhaft hierbei ist, daß die Kettenregler direkt in dem Wasser, welches der dritten Reaktionsstufe kontinuierlich zugeführt wird, gelöst werden können.

Das erfindungsgemäß erhaltene Polymer kann dann nach üblichen Verfahren weiter verarbeitet werden, beispielsweise kann es nach üblichen Methoden stückig gemacht werden, indem man es in Form von Schmelzprofilen austrägt, anschließend durch ein Wasserbad leitet und hierbei abkühlt und dann granuliert. Das Granulat kann man dann nach an sich bekannten Methoden extrahieren und anschließend oder gleichzeitig zu hochmolekularem Polyamid umsetzen. Die Extraktion kann beispielsweise mit Wasser oder wässriger Caprolactamlösung erfolgen. eine weitere Möglichkeit ist die Gasphasenextraktion, wie sie beispielsweise in EP-A-0 284 968 beschrieben ist. Die gewünschte Viskositätszahl des Endproduktes liegt in der Regel im Bereich von 120 bis 350 ml/g. Sie kann in an sich bekannter Weise eingestellt werden.

Das erfindungsgemäße Verfahren wird durch die nachstehenden Beispiele näher erläutert. Soweit nicht anders angegeben, beziehen sich in der Beschreibung und den Ansprüchen alle Mengen- bzw. Prozentangaben auf das Gewicht. Das eingesetzte Aminocapronitril hat eine Reinheit von 99,9 Gew.-% und enthält 250 ppm Tetrahydroazepin.

### Beispiel 1

Eine Reaktionslösung aus Aminocapronitril und Wasser (molares Mischungsverhältnis ACN/Wasser = 1:6) wird mit Hilfe einer Pumpe einem beheizten Wärmetauscher zugeführt und innerhalb von wenigen Minuten auf die gewünschte Reaktionstemperatur erhitzt. Auf der Druckseite der Eintragspumpe wird ein Druck von ca. 50 bar eingestellt, um die Einphasigkeit des Reaktionssystems sicherzustellen. Die aufgeheizte Reaktionsmischung wird anschließend durch ein beheiztes, zylindrisches Rohr mit einem Innendurchmesser von 36 mm und einer Länge von 1000 mm gepumpt. Das Rohr ist mit Katalysatorgranulat, hergestellt aus Titandioxid von Finnti, Typ S150, mit einem Durchmesser von 4 mm und einer Länge zwischen 5 und 20 mm, gefüllt. Das Titandioxid mit einer spezifischen Oberfläche von ca. 100 m²/g liegt in der Anatas-Modifikation vor und wird mit Hilfe von Sieben im Reaktionsrohr fixiert bzw. vom austretenden Produktstrom getrennt. Zur Flashverdampfung wird das unter dem Druck von ca. 50 bar stehende Reaktionsgemisch am Rohrende über ein Regelventil kontinuierlich in ein beheiztes zylindrisches Abscheidegefäß auf einen Druck von 30 bis 35 bar (siehe Tabelle) entspannt. Das Reaktionsgemisch wird dabei zweiphasig, so daß die in der Mischung vorliegenden Wasser- und Ammoniakmengen in die Gasphase übertreten können. Nach einer Verweilzeit von 3 h im Abscheidegefäß, das gleichzeitig als Nachreaktionszone dient, wird das Polymer kontinuierlich mit einer Schmelzepumpe aus dem Sumpf des Nachreaktors in ein zweites beheiztes, zylindrisches Rohr mit einem Innendurchmesser von 36 mm und einer Länger von 1000 mm gepumpt, wobei ein Druck zwischen 30 und 45 bar (siehe Tabelle) eingestellt wird. Das Rohr ist ebenfalls mit dem oben genannten Katalysatorgranulat gefüllt. Die zweite Flashverdampfung erfolgt durch Entspannung der Reaktionsmischung über ein Regelventil in ein zweites zylindrisches Auffanggefäß auf Drücke von 1 bis 2 bar. In dem Abscheidegefäß findet auch die Nachreaktion und insbesondere die Nachkondensation der Reaktionslösung statt, so daß nach einer Verweildauer von 4 bis 7 Stunden das erhaltene Polymer mit einer Schmelzepumpe aus dem Sumpf des Reaktors kontinuierlich über eine Düse in ein Wasserbad in Form von Schmelzprofilen ausgetragen, im Wasserbad verfestigt und granuliert werden kann.

Die Verfahrensparameter sind in Tabelle 1 aufgelistet. Die Ergebnisse zeigen, daß die korrespondierenden Polyamide einen niedrigen Extraktgehalt zwischen 9,0 und 9,8 Gew.-% aufweisen. Der Anteil niedermolekularer Bestandteile in den erfindungsgemäß hergestellten Polyamiden ist deutlich geringer als in Polyamiden, die nach der konventionellen Schmelzepolymerisation aus Caprolactam im sogenannten VK-Rohr, beschrieben in DE-A-14 95 198, EP-A-0 462 476 und EP-A-0 020 946, erhalten wurden. Diese weisen einen Extraktgehalt von ungefähr 11 Gew.-% auf.

### Beispiel 2

Eine Reaktionslösung aus Aminocapronitril und Wasser (molares Mischungsverhältnis ACN/Wasser = 1:6) wird mit Hilfe einer Pumpe einem beheizten Wärmetauscher zugeführt und innerhalb von wenigen Minuten auf die gewünschte Reaktionstemperatur erhitzt. Auf der Druckseite der Eintragspumpe wird ein Druck von ca. 50 bar eingestellt, um die Einphasigkeit des Reaktionssystems sicherzustellen. Die aufgeheizte Reaktionsmischung wird anschließend durch ein beheiztes, zylindrisches Rohr mit einem Innendurchmesser von 36 mm und einer Länge von 1000 mm gepumpt. Das Rohr ist mit Katalysatorgranulat, hergestellt aus Titandioxid von Finnti, Typ S150, mit einem Durchmesser von 4 min und einer Länger von zwischen 5 und 20 mm, gefüllt. Das Titandioxid mit einer spezifischen Oberfläche von ca. 100 m²/g liegt in der Anatas-Modifikation vor und wird mit Hilfe von Sieben im Reaktionsrohr fixiert bzw. vom austretenden Produktstrom getrennt. Zur Flashverdampfung wird das unter einem Druck von ca. 50 bar stehende Reaktionsgemisch am Rohrende
über ein Regelventil kontinuierlich in ein beheiztes zylindrisches Abscheidegefäß auf einen Druck von 30 bis 40 bar (siehe auch Tabelle 2) entspannt. Das Reaktionsgemisch wird dabei zweiphasig, so daß die in der Mischung vorliegenden Wasser- und Ammoniakmengen in die Gasphase übertreten können. Nach einer Verweilzeit von 3 h im Abscheidegefäß, das gleichzeitig als Nachreaktionszone dient, wird das Polymer kontinuierlich mit einer Schmelzepumpe aus dem Sumpf des Nachreaktors in ein zweites beheiztes, zylindrisches Rohr mit einem Innendurchmesser von 36 mm und einer Länge von 1000 mm gepumpt, wobei ein Druck zwischen 30 und 45 bar (siehe Tabelle) eingestellt wird. Das Rohr ist mit Raschigringen (Durchmesser 6 mm, Länge 6 mm) gefüllt. Zusätzlich zum Produktstrom aus dem Abscheidegefäß wird eine vorgeheizte wäßrige Lösung, die in einigen Verfahrensdurchführungen Kettenregler wie Adipinsäure und Triacetondiamin enthält, in den zweiten Rohrreaktor gepumpt.

Die zweite Flashverdampfung erfolgt durch Entspannung der Reaktionsmischung über ein Regelventil in ein zweites zylindrisches Auffanggefäß auf einen Druck von 3 bar. Nach einer Verweildauer von 4 Stunden wird die Reaktionsmischung mit Hilfe einer weiteren Schmelzepumpe durch ein Regelventil in einen dritten Abscheider entspannt, wobei der Druck zwischen der Druckseite der Pumpe und dem Regelventil so hoch ist, daß das Gemisch erneut einphasig-flüssig vorliegt. In dem letzten Abscheidegefäß findet bei einem Druck von 1,2 bar auch die Nachreaktion und insbesondere die Nachkondensation der Reaktionslösung statt, so daß nach einer Verweildauer von 3 Stunden das erhaltene Polymer mit einer Schmelzepumpe aus dem Sumpf des Reaktors kontinuierlich über eine Düse in ein Wasserbad in Form von Schmelzprofilen ausgetragen, im Wasserbad verfestigt und granuliert werden kann.

Die Verfahrensparameter sind in Tabelle 2 aufgelistet. Die Ergebnisse zeigen, daß die korrespondierenden Polyamide einen niedrigen Extraktgehalt aufweisen. Der Anteil niedermolekularer Bestandteile in den erfindungsgemäß hergestellten Polyamiden ist wiederum deutlich geringer als in Polamiden, die nach der konventionellen Schmelzepolymerisation aus Caprolactam im sogenannten VK-Rohr erhalten werden.

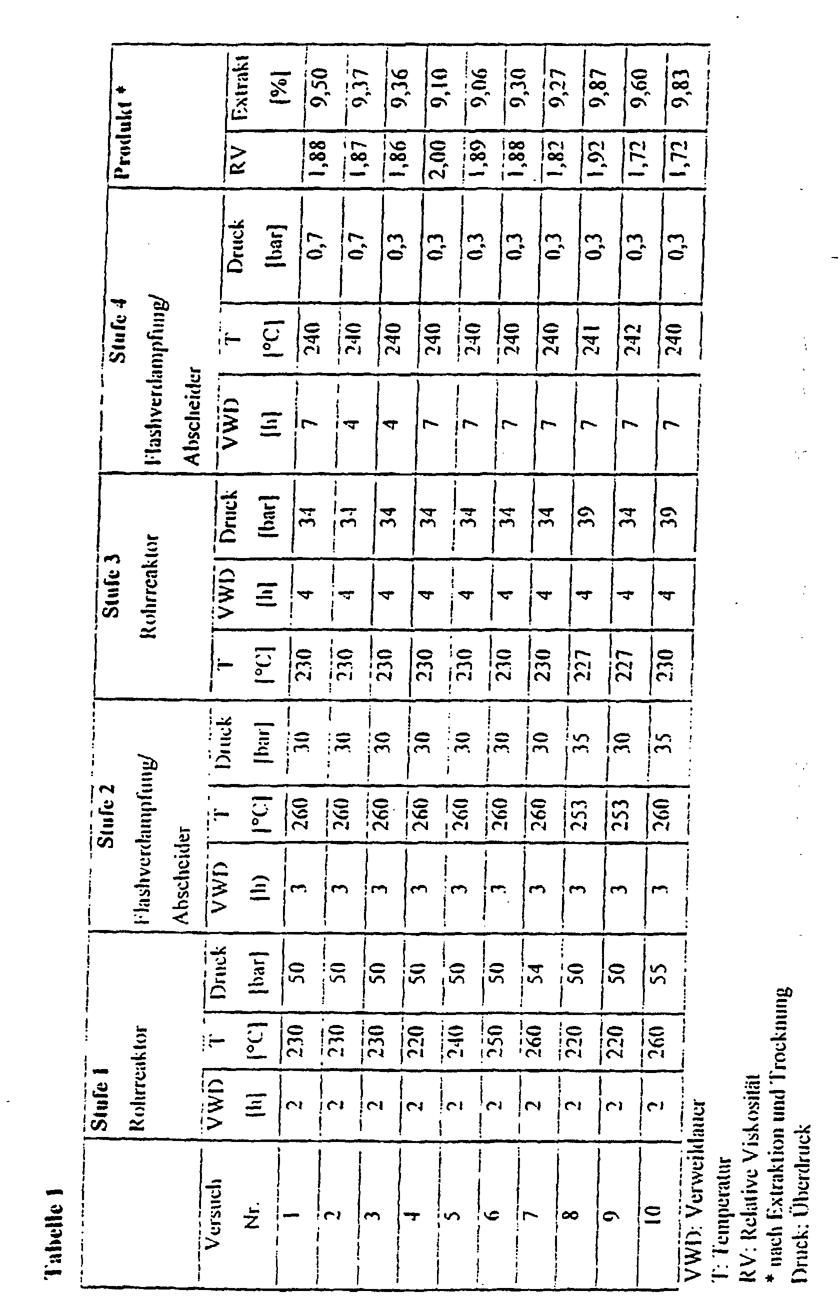

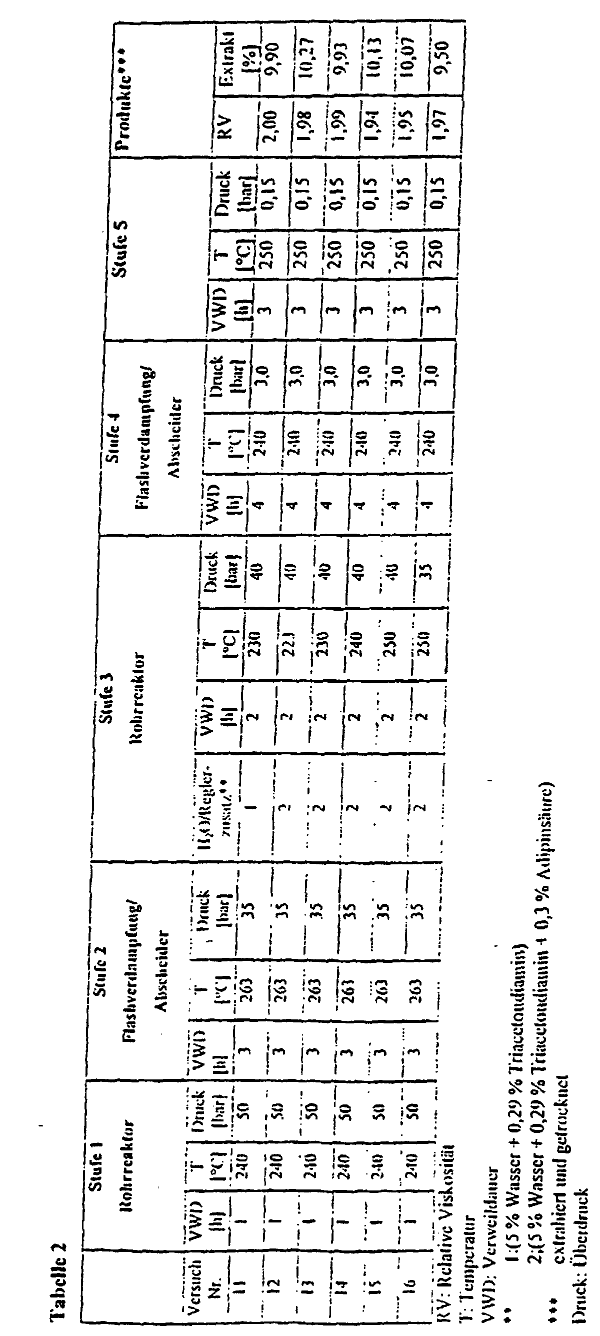

### Viskositätsstabilität der Beispielprodukte

Die sogenannte Viskositätsstabilität ist ein Maß für den spontanen Molekulargewichtsaufbau des Polymers in der flüssigen und festen Phase. Je größer die Stabilität, umso kleiner ist die Änderung der Produktviskosität innerhalb eines endlichen Zeitintervalls, in dem das Polymer beispielsweise zur Weiterverarbeitung aufgeschmolzen vorliegt. Eine hohe Viskositätsstabilität ist bei vielen Anwendungen außerordentlich wichtig und wünschenswert, da sie eine Konstanz der Produkteigenschaften gewährleistet und den Einfluß von Verarbeitungsprozessen auf die Viskosität minimiert.

Die nachstehenden Meßergebnisse zeigen, daß die erfindungsgemäß hergestellten Polyamide eine höhere Viskositätsstabilität aufweisen als konventionell polymerisierte Vergleichspolyamide.

### Messung der Viskositätsstabilität

Die erfindungsgemäß aus ACN direktpolymerisierten Produkte werden mit Wasser extrahiert und im Vakuum getrocknet. Anschließend erfolgt die Bestimmung der realtiven Lösungsviskosität (RV) in 1 Gew.-%iger Lösung in 96 Gew.-%iger Schwefelsäure bei 25°C.

Für die Vergleichsbeispiele wird Caprolactam konventionell hydrolytisch polykondensiert, wobei die Kondensationsdauer so eingestellt wird, daß die Produktviskositäten den Viskositäten der aus ACN hergestellten Polyamide entsprechen.

Um die Viskositätsstabilität beurteilen zu können, werden sowohl die Lösungsals auch die Schmelzviskositäten sämtlicher Produktproben - hergestellt aus ACN oder aus Caprolactam - nach einer 15 und 25 Minuten andauernden Lagerung bei einer Temperatur von 270°C erneut bestimmt. Die Schmelzeviskositäten werden mit Hilfe eines Kapillarrheometers bei einem Schergefälle von 100/s und einer Temperatur von 270°C ermittelt.

**Tabelle 3**

| Messungen der Viskositätsstabilität | Ausgangsprodukt | | Nach 15 min Lagerung bei 270°C | | Nach 25 min Lagerung bei 270°C | |
|---|---|---|---|---|---|---|
| aus Versuch Nr. | RV¹ | Restfeuchte [%] | SV²[dPas] | RV¹ | SV² [dPas] | RV¹ |
| 9 | 1,74 | 0,029 | 40 | 1,84 | 60 | 1,84 |
| Vergleich 1 (Caprolactam) | 1,75 | 0,065 | 250 | 2,07 | 380 | 2,21 |
| 8 | 1,93 | 0,059 | 220 | 2,05 | 320 | 2,08 |
| Vergleich 2 (Caprolactam) | 1,93 | 0,046 | 420 | 2,21 | 550 | 2,30 |
| 4 | 2,04 | 0,041 | 340 | 2,13 | 370 | 2,16 |
| Vergleich 3 (Caprolactam) | 2,05 | 0,039 | 600 | 2,30 | 790 | 2,42 |

| | | | | | | |
|---|---|---|---|---|---|---|
| ¹RV = relative Viskosität (in Lösung); ²SV = Schmelzviskosität | | | | | | |

Wie die vorstehende Tabelle zeigt, sind die in der flüssigen (Schmelz-)Phase hervorgerufenen Viskositätsänderungen der aus ACN hergestellten Produkte deutlich kleiner als die der konventionellen Polyamide aus Caprolactam.

### Restextraktgehalt eines Beispielproduktes

Das extrahierte und getrocknete Granulat des Beispielproduktes aus Versuch 4 wird in einem Taumeltrockner im Stickstoffstrom bei einer Temperatur von 160°C getempert. Nach einer Temperdauer von 24 Stunden erreicht das Polymer eine relative Viskosität von 2,7.

Zur Bestimmung des Restextraktgehaltes, daß heißt des Extraktgehaltes der bereits extrahierten Proben, wird das Granulat erneut mit Methanol extrahiert. Hierzu werden in einer Extraktionshülse ca. 15 g der Polyamid-Probe analytisch eingewogen und in einer Soxhlettextraktionsapparatur mit 200 ml Methanol für 16 h extrahiert. Das extrakthaltige Methanol wird anschließend in einem Rotationsverdampfer bei 50°C bei ca. 100 mbar abdestilliert, so daß der Restextrakt gravimetrisch bestimmt werden kann. Es wird darauf geachtet, daß im Zuge der Destillation des Methanols kein Monomer verloren geht.

### Remonomerisierung eines Beispielproduktes

Zur Messung der Remonomerisierung wird die Änderung des Restextraktgehalts nach einer 10 Minuten dauernden Lagerung des Polymers im schmelzeflüssigen Zustand bei Temperaturen von 240 und 270°C untersucht. Das Polyamidgranulat wird hierzu in einem Viskosimeter (Rheograph) bei 240°C bzw. 270°C für 10 min aufgeschmolzen, und der Restextraktgehalt des fadenförmig ausgetragenen Produktes wird mit der vorstehenden Methode anschließend erneut bestimmt. Der Vergleich der Extraktzunahme im Polyamid, hergestellt aus Aminocapronitril, mit dem konventionell aus Caprolactam synthetisierten Produkt belegt, daß der Anstieg des Restextraktgehaltes und somit die Remonomerisierungsrate im erfindungsgemäß hergestellten Polymer deutlich langsamer bzw. kleiner ist..

**Tabelle 4**

| | **Vergleichsbeispiel** | **aus Versuch Nr. 4** |
|---|---|---|
| **Relative Viskosität** | 2,7 | 2,7 |
| **Zunahme des Extraktes bei** **240°C (g/100g)** | 0,76 | 0,49 |
| **Zunahme des Extraktes bei** **270°C (g/100g)** | 1,02 | 0,81 |

## Patentansprüche

1. Kontinuierliches Verfahren zur Herstellung von Polyamiden durch Umsetzung mindestens eines Aminonitrils mit Wasser, das die folgenden Stufen umfaßt:
(1) Umsetzung mindestens eines Aminonitrils mit Wasser bei einer Temperatur von 200 bis 290°C und einem Druck von 40 bis 70 bar in einem Strömungsrohr, das einen Brönsted-Säurekatalysator, ausgewählt aus einem Beta-Zeolith-, Schichtsilikat- oder einem Metalloxid-Katalysator in Form eines Festbetts enthält,
(2) Entspannung unter Wärmeeintrag oder adiabatische Entspannung des Umsetzungsgemisches aus Stufe (1) in eine erste Abscheidezone auf einen Druck von 20 bis 40 bar, wobei der Druck mindestens 10 bar niedriger ist als der Druck in Stufe (1), und auf eine Temperatur im Bereich von 220 bis 290°C unter Flashverdampfung und Austrag von Ammoniak, Wasser und gegebenenfalls Monomeren und Oligomeren des Aminonitrils,
(3) weitere Umsetzung des Umsetzungsgemisches aus Stufe (2) unter Wasserzusatz bei einer Temperatur von 200 bis 290°C und einem Druck von 25 bis 55 bar, die in Gegenwart eines Brönsted-Säurekatalysators, ausgewählt aus einem Beta-Zeolith-, Schichtsilikat- oder Metalloxid-Katalysator in Form eines Festbettes durchgeführt werden kann,
(4) Entspannung unter Wärmeeintrag oder adiabatische Entspannung des Umsetzungsgemisches aus Stufe (3) in eine zweite Abscheidezone auf einen Druck von 0,01 bis 20 bar, wobei der Druck mindestens 20 bar niedriger ist als der Druck in Stufe (3), und auf eine Temperatur im Bereich von 220 bis 290 °C unter Flashverdampfung und Austrag von Ammoniak, Wasser und gegebenenfalls Monomeren und Oligomeren des Aminonitrils.

2. Verfahren nach Anspruch 1, das zusätzlich die folgende Stufe umfaßt:
(5) Nachkondensation des Produktgemisches aus Stufe (4) bei einer Temperatur von 230 bis 280°C und einem Druck von 0,01 bis 10 bar.

3. Verfahren nach Anspruch 1 oder 2, **dadurch gekennzeichnet, daß** die in den Stufen (2) und (4) durch Flashverdampfung ausgetragenen Monomere und Oligomere des Aminonitrils in die Umsetzung zurückgeführt werden.

4. Verfahren nach einem der Ansprüche 1 bis 3, **dadurch gekennzeichnet, daß** das Umsetzungsgemisch in den Stufen (1) und (3) einphasig-flüssig vorliegt.

5. Verfahren nach einem der Ansprüche 1 bis 4, **dadurch gekennzeichnet, daß** als Aminonitril Aminocapronitril eingesetzt wird.

## Claims

1. A continuous process for producing polyamides by reacting at least one aminonitrile with water, comprising the following steps:
(1) reacting at least one aminonitrile with water at a temperature of from 200 to 290°C at a pressure of from 40 to 70 bar in a flow tube containing a Brönsted acid catalyst selected from a beta-zeolite, sheet-silicate or metal oxide catalyst in the form of a fixed bed,
(2) diabatically or adiabatically expanding the reaction mixture from step (1) into a first separation zone to a pressure of from 20 to 40 bar, the pressure being at least 10 bar lower than the pressure in step (1), and to a temperature within the range from 220 to 290°C by flash evaporation and removal of ammonia, water and any aminonitrile monomer and oligomer,
(3) further reacting the reaction mixture from step (2) in the presence of water at a temperature of from 200 to 290°C and a pressure of from 25 to 55 bar and in the presence or absence of a Brönsted acid catalyst selected from a beta-zeolite, sheet-silicate or metal oxide catalyst in the form of a fixed bed,
(4) diabatically or adiabatically expanding the reaction mixture from step (3) into a second separation zone to a pressure of from 0.01 to 20 bar, the pressure being at least 20 bar lower than the pressure in step (3), and to a temperature within the range from 220 to 290°C by flash evaporation and removal of ammonia, water and any aminonitrile monomer and oligomer.

2. A process as claimed in claim 1, further comprising the following step:
(5) postcondensing the product mixture from step (4) at a temperature of from 230 to 280°C and a pressure of from 0.01 to 10 bar.

3. A process as claimed in claim 1 or 2, wherein the aminonitrile monomers and oligomers removed by flash evaporation in steps (2) and (4) are returned into the reaction.

4. A process as claimed in any of claims 1 to 3, wherein the reaction mixture in steps (1) and (3) is present as a single liquid phase.

5. A process as claimed in any of claims 1 to 4, wherein an aminonitrile used is aminocapronitrile.

## Revendications

1. Procédé continu pour la préparation de polyamides par réaction d'au moins un aminonitrile avec de l'eau, comprenant les étapes suivantes:
(1) réaction d'au moins un aminonitrile avec de l'eau à une température de 200 à 290°C et une pression de 40 à 70 bar dans un tube à passage contenant un catalyseur acide de Brönsted, choisi parmi un catalyseur de β-zéolithe, de silicate stratifié ou d'oxyde métallique, sous la forme d'un lit fixe,
(2) détente avec apport de chaleur ou détente adiabatique du mélange réactionnel provenant de l'étape (1) dans une première zone de séparation à une pression de 20 à 40 bar, la pression étant inférieure d'au moins 10 bar à la pression de l'étape (1), et à une température de l'ordre de 220 à 290°C avec évaporation rapide ("flash") et soutirage d'ammoniac, d'eau et éventuellement de monomères et d'oligomères de l'aminonitrile,
(3) poursuite de la réaction du mélange réactionnel provenant de l'étape (2) avec addition d'eau à une température de 200 à 290°C et une pression de 25 à 55 bar, et qui peut être entreprise en présence d'un catalyseur acide de Brônsted, choisi parmi un catalyseur de β-zéolithe, de silicate stratifié ou d'oxyde métallique, sous la forme d'un lit fixe,
(4) détente avec apport de chaleur ou détente adiabatique du mélange réactionnel provenant de l'étape (3), dans une deuxième zone de séparation à une pression de 0,01 à 20 bar, la pression étant inférieure d'au moins 20 bar à la pression de l'étape (3), et à une température de l'ordre de 220 à 290°C avec évaporation flash et soutirage d'ammoniac, d'eau et éventuellement de monomères et d'oligomères de l'aminonitrile.

2. Procédé selon la revendication 1, comprenant en outre l'étape suivante:
(5) post-condensation du mélange de produits provenant de l'étape (4) à une température de 230 à 280°C et une pression de 0,01 à 10 bar.

3. Procédé selon la revendication 1 ou 2, **caractérisé en ce que** les monomères et oligomères de l'aminonitrile soutirés aux étapes (2) et (4) par évaporation flash sont recyclés dans la réaction.

4. Procédé selon l'une des revendications 1 à 3, **caractérisé en ce que** le mélange réactionnel est présent dans les étapes (1) et (3) sous forme d'une seule phase liquide.

5. Procédé selon l'une des revendications 1 à 4, **caractérisé en ce que** l'on met en oeuvre comme aminonitrile de l'aminocapronitrile.
